# EUROPEAN PATENT APPLICATION

(11) **EP 4 102 180 A2**
(43) Date of publication of application: **14.12.2022**
(21) Application number: 22177722.0
(22) Date of filing: 08.06.2022
(51) Int. Cl.: G01C 15/06, G01C 15/00

(54) **DATA PROCESSING APPARATUS, DATA PROCESSING METHOD, AND DATA PROCESSING PROGRAM**

(30) Priority: 09.06.2021 JP 2021096542
(71) Applicant: TOPCON CORPORATION, Tokyo 174-8580 (JP)
(72) Inventor: SASAKI, You, Tokyo, 174-8580 (JP)
(74) Representative: Eisenführ Speiser

(57) **Abstract**

A prism constant can be obtained more efficiently, using a laser positioning device 100 including an image data obtaining portion 109 obtaining an image data which is obtained by photographing a reflection prism device, a data storing portion 118 storing a relationship of a prism constant of the reflection prism device and the image data, and a prism constant obtaining portion 111 obtaining the prism constant of the reflection prism device based on the relationship.

## Description

### Technical Field

The present invention relates to a technique for handling a reflection prism device for surveying.

### Background Art

In a surveying using light waves such as laser light, a technique is known in which a reflection prism device is used. In this technique, it is necessary to obtain a prism constant of the reflection prism used. The prism constant is a constant for correcting an actually measured ranged value, and it is different depending on structure, material, holding structure (a structure for holding the reflection prism onto a holder), etc. of the reflection prism device.

Therefore, in order to ensure accuracy of ranging, it is important to know the prism constant of the reflection prism device used. The prism constant is disclosed in a catalogue or information from a manufacturer or a vendor.

For example, a laser positioning device such as a total station has a function in which the prism constant can be input beforehand. An operation in which the prism constant is input as an initial condition is performed before a positioning (ranging) operation. In this case, a correction based on the prism constant input is performed in the laser positioning device.

Patent document 1: Japanese Unexamined Patent Application Publication No. Heisei 02 (1990)-268216

### Summary of Invention

There is problem in that it is necessary that a user consciously obtain the prism constant, the operation is complicated, and reading and inputting may be in error. Furthermore, depending on the prism constant, direction of the reflection prism device toward a positioning device may have a huge effect on positioning accuracy.

Under such circumstances, an object of the present invention is to provide a technique in which the prism constant may be obtained more efficiently. Furthermore, related to the prism constant obtained, an object of the present invention is to provide a technique in which deterioration of measuring accuracy based on direction of the reflection prism device toward the surveying device can be restrained.

An aspect of the present invention is a data processing apparatus including: an image data obtaining portion obtaining an image data which is obtained by photographing a reflection prism device; a storing portion for storing a relationship of a prism constant of the reflection prism device and the image data; and a prism constant obtaining portion obtaining the prism constant of the reflection prism device based on the relationship.

In the present invention, an embodiment may be mentioned in which the relationship is a relationship of an external appearance of the reflection prism device and the prism constant. In the present invention, an embodiment may be mentioned in which the relationship is a relationship of a letter or code display displayed on the reflection prism device and the prism constant. In the present invention, an embodiment may be mentioned in which the apparatus further includes: a reflection prism device orientation obtaining portion obtaining orientation of the reflection prism device based on the image data; and an announcing portion announcing information of the orientation of the reflection prism device.

In the present invention, an embodiment may be mentioned in which the image data is output from a camera of a light wave positioning device, and the orientation of the reflection prism device is an orientation with respect to the light wave positioning device. In the present invention, an embodiment may be mentioned in which information of orientation of the reflection prism device with respect to the light wave positioning device is transmitted to an external terminal wirelessly.

In the present invention, an embodiment may be mentioned in which a three-dimensional model of the reflection prism device is stored in the storing portion, and orientation of the reflection prism device with respect to the light wave positioning device is obtained based on an image of a case in which the three-dimensional model is seen from a changed viewpoint. In the present invention, an embodiment may be mentioned in which the apparatus further includes a determining portion determining whether or not the reflection prism device faces to the front with respect to the light wave positioning device based on orientation of the reflection prism device with respect to the light wave positioning device, and wherein ranging of the reflection prism device is performed by the light wave positioning device in a case in which it is determined that the devices face to the front.

Another aspect of the present invention is a data processing method in a light wave positioning device having a camera, including steps of: obtaining image data which is obtained by photographing a reflection prism device by the camera; obtaining a prism constant of the reflection prism device based on the image data of the reflection prism device; obtaining an orientation of the reflection prism device with respect to the light wave positioning device based on the image data of the reflection prism device, transmitting information of the orientation of the reflection prism device with respect to the light wave positioning device to a terminal; and displaying information of the orientation of the reflection prism device with respect to the light wave positioning device on a displaying device of the terminal.

Another aspect of the present invention is a data processing method including steps of: obtaining image data which is obtained by photographing a reflection prism device; and obtaining a prism constant of the reflection prism device based on relationship of prism constant of the reflection prism device and the image data.

Another aspect of the present invention is a data processing program which is read by a computer processor so as to be executed, the program executes the computer processor functioning as the following portions, including: an image data obtaining portion obtaining an image data which is obtained by photographing a reflection prism device; a storing portion storing a relationship of a prism constant of the reflection prism device and the image data; and a prism constant obtaining portion obtaining the prism constant of the reflection prism device based on the relationship.

### Effects of Invention

According to the present invention, the prism constant can be obtained more efficiently. Furthermore, according to the present invention, related to the prism constant obtained, deterioration of measuring accuracy based on direction of the reflection prism device toward the surveying device can be restrained.

### Brief Description of Drawings

Figs. 1A and 1B are a diagram explaining a prism constant.
Fig. 2 is a front diagram of a laser positioning device.
Fig. 3 is a block diagram of the laser positioning device.
Fig. 4 is a front diagram of a reflection prism device.
Figs. 5A and 5B are side views of the reflection prism.
Fig. 6 is a diagram showing data stored.
Fig. 7 is a diagram showing data stored.
Figs. 8A and 8B are plane views explaining direction of the reflection prism device toward the positioning device.
Figs. 9A and 9B are diagrams showing content displayed to a communication terminal.

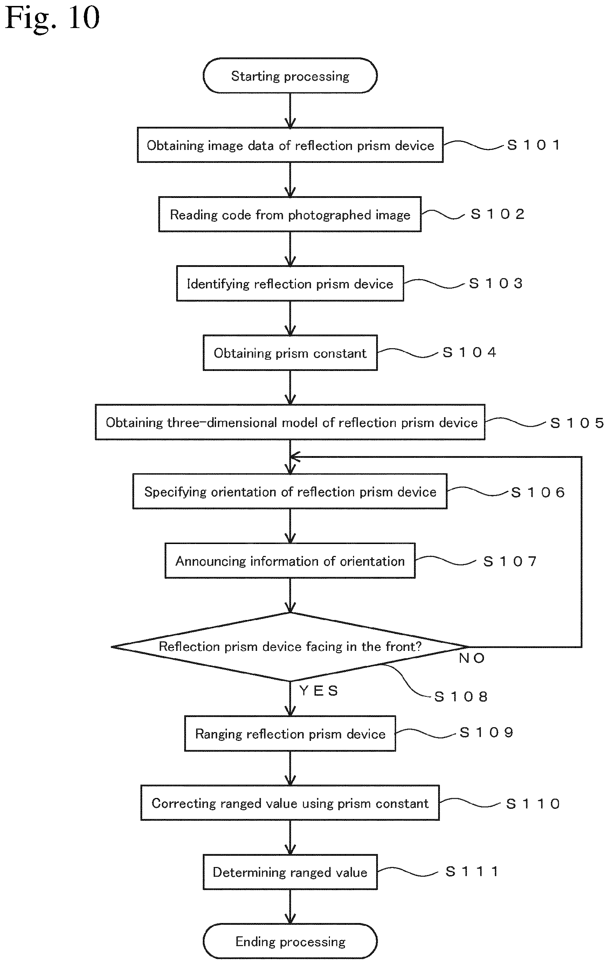

Fig. 10 is a flowchart showing an example of steps of processing.
Fig. 11 is a diagram showing an example of a situation in which positioning (ranging) operation is performed.

### Embodiments of Invention

### Prism Constant

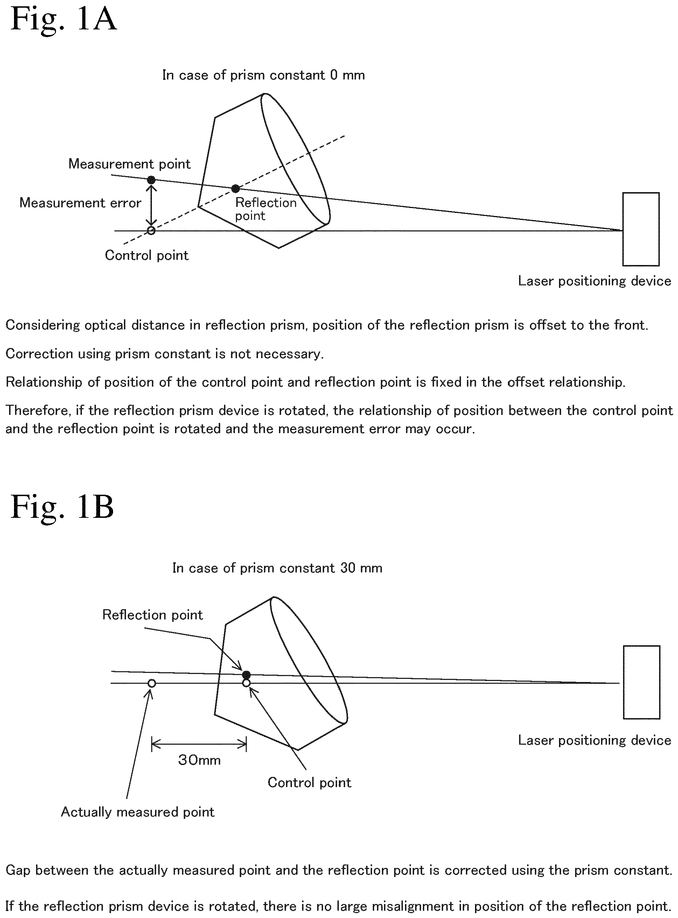

First, the prism constant is simply explained. Fig. 1A shows a case in which the prism constant is 0 mm, and Fig. 1B shows a case in which the prism constant is 30 mm. Furthermore, in Figs. 1A and 1B, a situation in which a reflection prism device does not face to the front toward the positioning device (the optical axis does not indicate facing toward the positioning device) is shown exaggerated.

The reflection prism inverts direction of incident light 180 degrees and reflects it. In this case, because of light traveling in a material of high refractive index (n = about 1.5 in the case of glass) forming the reflection prism, an optical position of reflection point exists on the far side of the reflection prism seen from the positioning device side. That is, although an actual reflection point exists in the reflection prism, since the speed of light in the reflection prism decreases (1/refractive index), an optical reflection point which is measured assuming the speed of light is invariable is at a position farther than the reflection point seen from the positioning device. A correcting parameter to correct this gap is the prism constant.

For example, the case of Fig. 1A, in which the prism constant is 0 mm, is explained. Here, the reflection prism device is constructed by a reflection prism and a holder holding the reflection prism. In the reflection prism device, a control point, which is a point of basis of measurement is determined. The reflection prism device is arranged so that this control point conforms with a point at which ranging (positioning) is required.

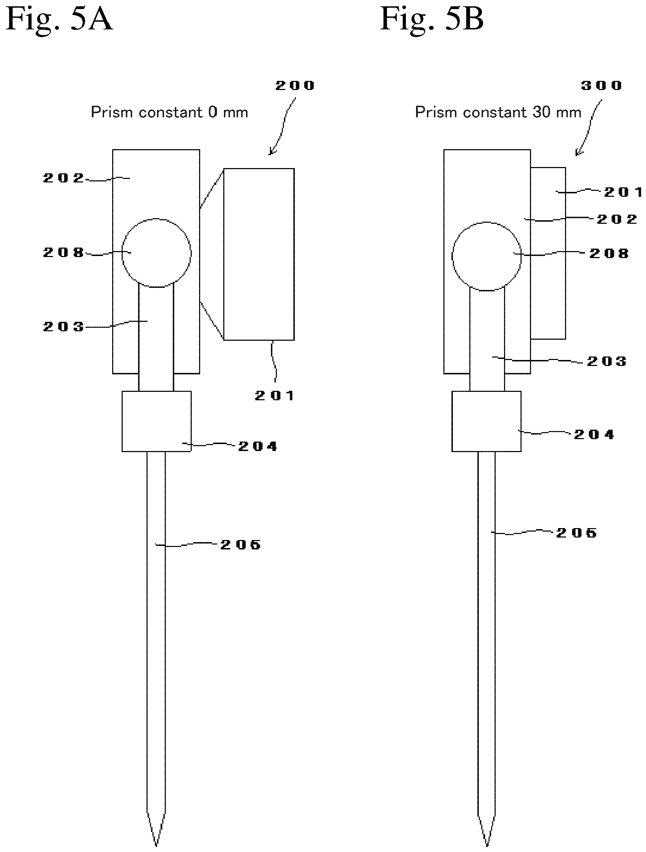

For example, in Figs. 5A and 5B, a reflection prism device 200 having a prism constant of 0 mm, and a reflection prism device 300 having a prism constant of 30 mm, are shown. In the reflection prism devices 200 and 300, the control point is set at an extension of a support pillar 205. A user arranges the reflection prism device 200 or 300 at a point at which ranging (positioning) is performed in a condition the support pillar 205 stands vertically, and performs ranging (positioning).

For the reason mentioned above, in the reflection prism device, there is a gap between a position of actual reflection point and a position of optical reflection point. In the case of the prism constant 0 mm, considering the above gap, position of the reflection prism with respect to the holder is set more toward the front (a position closer to the laser positioning device side). That is, the position of the reflection prism is set at a position shifted to the positioning device side from the control point.

In this way, actual distance from the positioning device to the control point of the reflection prism device and optical distance from the positioning device to the reflection point are made to agree with each other.

However, in the case of a prism constant of 0 mm, the following problems arise. In the case of the prism constant of 0 mm, as mentioned above, the position of the reflection prism with respect to the holder is set so as to be offset to the front (a position shifted toward the laser positioning device side), and the position of the control point is at a position shifted from the reflection point in the reflection prism.

That is, in order to align optical positions, there is a physical gap between positions of the reflection point and the control point along the optical axis direction.

Therefore, as shown in Fig. 1A, if the reflection prism does not face to the front toward the laser positioning device, a line connecting the control point and the reflection point rotates, and there is a gap at a position along a direction perpendicular to the optical axis of the reflection point and the control point. This gap is a measurement error.

For example, in Fig. 1A, a case in which the reflection prism device rotates around the control point as the center is shown. In this case, if the reflection prism device rotates, the reflection point moves along the circumference around the control point as the center, thereby generating the measurement error. This measurement error increases as a physical separation distance between the reflection point and the control point increase. This measurement error manly appears as an error in positioning of the reflection prism device.

Therefore, in the case of a prism constant of 0 mm, it is necessary to be careful so that the reflection prism faces to the front toward the laser positioning device.

Next, in the case of Fig. 1B, in which the prism constant is a value that is not 0 (30 mm in the case of Fig. 1B) is explained. In this case, the reflection point and the control point can be physically made to agree or be closer. That is, a physical distance from the positioning device to the reflection point and a physical distance from the positioning device to the control point can be made to agree or be closer.

On the other hand, an optical distance from the positioning device to the reflection point and a physical distance from the positioning device to the control point are different values. This difference is the prism constant.

That is, in the case of Fig. 1B, although the control point is intended to be an object of ranging, actually, the object of ranging is a point 30 mm farther than the control point. Therefore, a value of negative 30 mm from the actually measured value is the final ranged value.

In the case of Fig. 1B, even if the reflection prism does not face to the front toward the laser positioning device and is inclined, there is no difference (or there is a small difference) in physical positions of the reflection point and the control point. Therefore, an error generated is less than the case of Fig. 1A in which the prism constant is 0 mm.

As explained, there are two cases in which the prism constant is 0 mm or is not 0 mm. In both cases, information about the prism constant of the reflection prism device used is necessary. Furthermore, in the case of a prism constant of 0 mm, it is necessary to be careful in setting the direction of the reflection prism device.

### Positioning Device

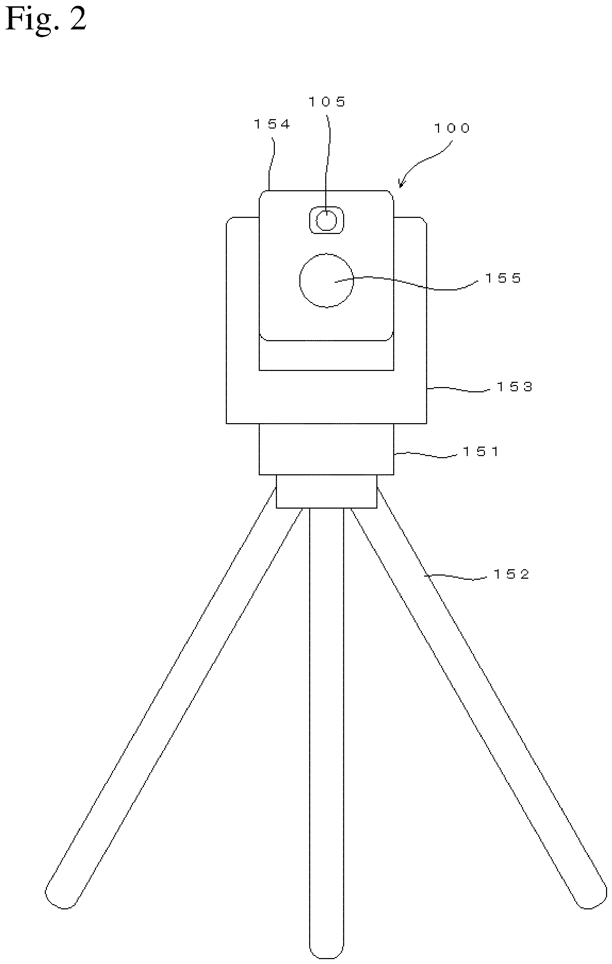

Fig. 2 shows an exterior appearance of the laser positioning device 100 using the present invention seen from the front. The laser positioning device 100 is a surveying device functioning as a total station. The laser positioning device 100 measures distance to a target and its direction, so that the position of the target relative to the laser positioning device 100 is measured. The laser positioning device 100 includes a base portion 151, a tripod 152 supporting the base portion 151, a horizontal rotating portion 153 held on the base portion 151 in a rotatable condition, and a vertical rotating portion 154 performing elevation rotation and depression rotation relative to the horizontal rotating portion 153.

The horizontal rotating portion 153 rotates horizontally with respect to the base portion 151. The rotation is performed by a motor. The vertical rotating portion 154 rotates vertically (elevation rotation and depression rotation) with respect to the horizontal rotating portion 153. Each rotation is performed by a motor.

The vertical rotating portion 154 contains an optical system and a peripheral circuit to perform laser ranging, and a camera to perform photographing.

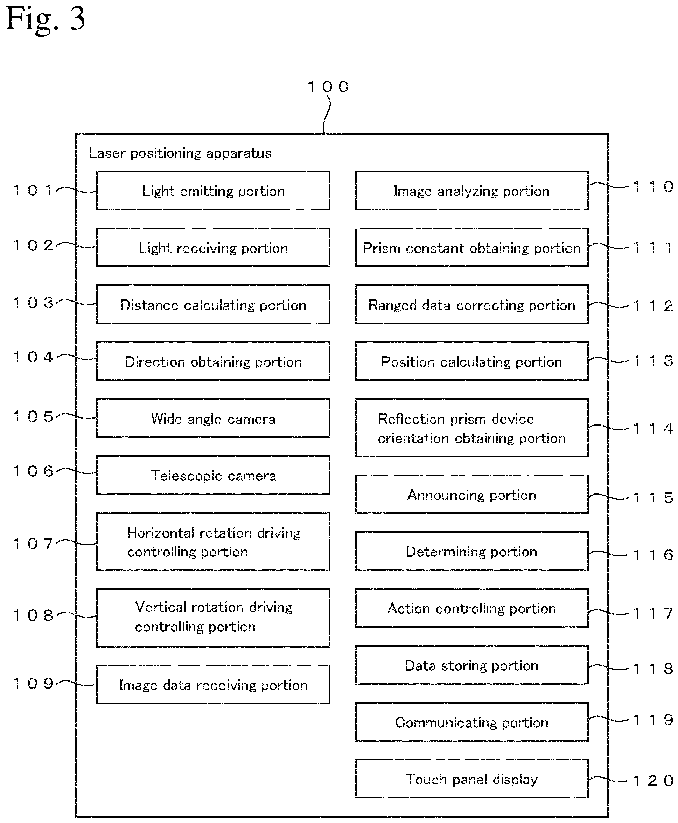

Although not shown in Fig. 2, the laser positioning device 100 includes a touch panel display 120 (see Fig. 3) combining an operating panel with a display. This touch panel display 120 displays information regarding operation of the laser positioning device 100, kinds of data surveyed, and the like.

Fig. 3 shows a block diagram of the laser positioning device 100. In each function block constructing the block diagram of Fig. 3, a part performing calculation is realized by a computer. Of course, an embodiment is also possible in which a part or all of the function block is realized by a dedicated electrical circuit.

The laser positioning device 100 includes a light emitting portion 101, a light receiving portion 102, a distance calculating portion 103, a direction obtaining portion 104, a wide angle camera 105, a telescopic camera 106, a horizontal rotation driving controlling portion 107, a vertical rotation driving controlling portion 108, an image data receiving portion 109, an image analyzing portion 110, a prism constant obtaining portion 111, a ranged data correcting portion 112, a position calculating portion 113, a reflection prism device orientation obtaining portion 114, an announcing portion 115, a determining portion 116, action controlling portion 117, a data storing portion 118, a communicating portion 119, and the touch panel display 120.

The light emitting portion 101 is a part relating to light emission of ranging light (laser light for ranging), and includes a light emitting device emitting ranging light, an optical system such as a lens, and a peripheral circuit of the light emitting device. The light receiving portion 102 is a part relating to light receiving of ranging light reflected from an object, and includes an optical system such as a lens, a light receiving device, and a peripheral circuit of the light receiving device.

The ranging light from the light emitting portion 101 is output from the center of an objective lens 155 to the outside of the laser positioning device 100, and reflected light of this ranging light is input from the center of the objective lens 155 to inside of the laser positioning device 100.

The optical system of the light emitting portion 101 and the optical system of the light receiving portion 102 are partially shared, each optical axis thereof is separate and synthesized by an optical system using a half-mirror or the like, and outgoing light from the laser positioning device 100 and incident light on the laser positioning device 100 are set to overlap on one optical axis.

The distance calculating portion 103 calculates a distance to the object using the principle of light wave ranging. In order to calculate distance, a method in which phase difference in the ranging light received is used, and a method in which propagation time is used, may be mentioned. In this example, the method using phase difference is used for ranging.

In the method using phase difference, a control optical path is arranged in the positioning device. A distance to the object is calculated from difference (phase difference) between light receiving timing of ranging light propagating in this control optical path and light receiving timing of the ranging light reflected from the object. In the method using propagation time, a distance to the object is calculated from time at which ranging light reaches the object, is reflected, and returns.

The direction obtaining portion 104 obtains direction of ranging of an objective point. Rotation angles of horizontal rotating portion 153 and vertical rotating portion 154 are accurately measured by an encoder. By measuring these angles, the direction of ranging of the objective point seen from the laser positioning device 100, that is, the direction of optical axis of the laser positioning device 100 is obtained.

The wide angle camera 105 and the telescopic camera 106 are digital camera enabling adjustment of image magnification and are able to photograph static images and moving images. In Fig. 2, the wide angle camera 105 is shown. The telescopic camera 106 photographs via the objective lens 155. As mentioned above, the ranging light is output and is input via the objective lens 155.

A relationship between external orientation elements (position and orientation) of the wide angle camera 105 and the telescopic camera 106 and external orientation elements of optical system for ranging is known. In this example, an optical axis of the telescopic camera 106 conforms with an optical axis of the ranging light. Although an optical axis of the wide angle camera 105 does not agree with the optical axis of the telescopic camera 106, they are set to be in parallel relationship.

The horizontal rotation driving controlling portion 107 drives and controls horizontal rotation of the horizontal rotating portion 153. The vertical rotation driving controlling portion 108 drives and controls vertical rotation of the vertical rotating portion 154.

The image data receiving portion 109 accepts image data of images photographed by the wide angle camera 105 and the telescopic camera 106. The image analyzing portion 110 performs image analysis of images photographed by the wide angle camera 105 and the telescopic camera 106. In this image analysis, the reflection prism device which is imaged is identified, and orientation of the reflection prism device relative to the positioning device 100 is obtained. Details in processing performed in the image analyzing portion 110 are explained below.

The prism constant obtaining portion 111 obtains the prism constant based on the identified information of the reflection prism device obtained as a result of the image analysis in the image analyzing portion 110. The ranged data correcting portion 112 corrects the value of distance to the reflection prism calculated by the distance calculating portion 103, using the prism constant obtained by the prism constant obtaining portion 111. This corrected value is the final ranged value.

For example, a case may be assumed in which a prism constant of a reflection prism device, based on the identified information determined by the image analyzing portion 110 from an image is, 20 mm. In this case, the distance data correcting portion 112 corrects the distance calculated by the distance calculating portion 103 using the prism constant obtained as above, so that the final ranged value is obtained. In this case, if the distance calculated by the distance calculating portion 103 is assumed L, L - 20 mm is obtained as the final ranged value.

The position calculating portion 113 calculates the three-dimensional position of the ranged point based on the ranged value and its direction. Here, if external orientation elements (orientation and position) of the laser positioning device 100 in an absolute coordinate system are known, the three-dimensional position in an absolute coordinate system of the ranged point is obtained. The absolute coordinate system is a coordinate system used in a case in which GNSS or a map is described.

The reflection prism device orientation obtaining portion 114 obtains information of orientation of the reflection prism device relative to the laser positioning device 100, based on the result of image analysis in the image analyzing portion 110.

The announcing portion 115 outputs the information regarding orientation of the reflection prism device obtained by the reflection prism device orientation obtaining portion 114, as announcement information. This announcement information is output to the outside via the communicating device 119. For example, the above announcement information is transmitted to a communicating terminal which is carried by an operator who arranges the reflection prism device, via a wireless LAN line.

The determining portion 116 determines whether or not the reflection prism device faces the laser positioning device in the front. For example, if an angle between a direction of front surface of the reflection prism device and a line connecting the reflection prism device and the laser positioning device is not greater than a predetermined threshold value (for example, 5 degrees), the reflection prism device is determined to be facing the laser positioning device in the front.

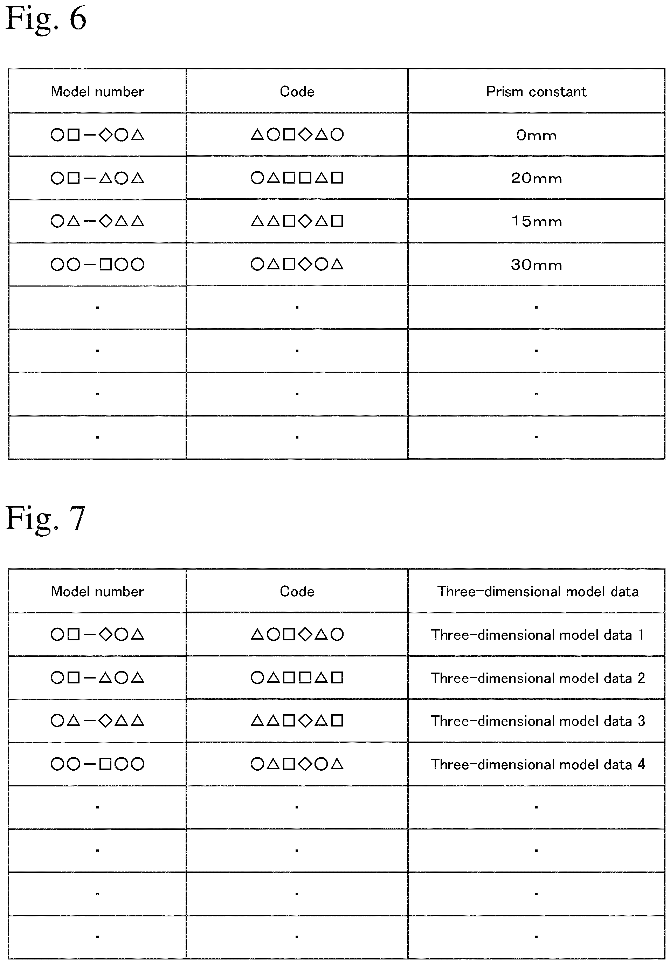

The action controlling portion 117 controls the action of the laser positioning device 100. The action controlling portion 117 is, for example, a microcomputer. The data storing portion 118 stores a working program necessary to operate the laser positioning device 100, various types of data, and surveying data. Furthermore, in the data storing portion 118, table data exemplified in Figs. 6 and 7 is stored.

The communicating device 119 communicates with external devices. The communication is performed using light communication, wireless LAN, a cellular telephone line, or the like. Wired communication is also possible. The touch panel display 120 functions as a user interface, and it functions as an operating panel of the laser positioning device 100, a displaying device for information regarding operation, and a displaying device for various types of data, or the like, surveyed.

### Reflection Prism Device

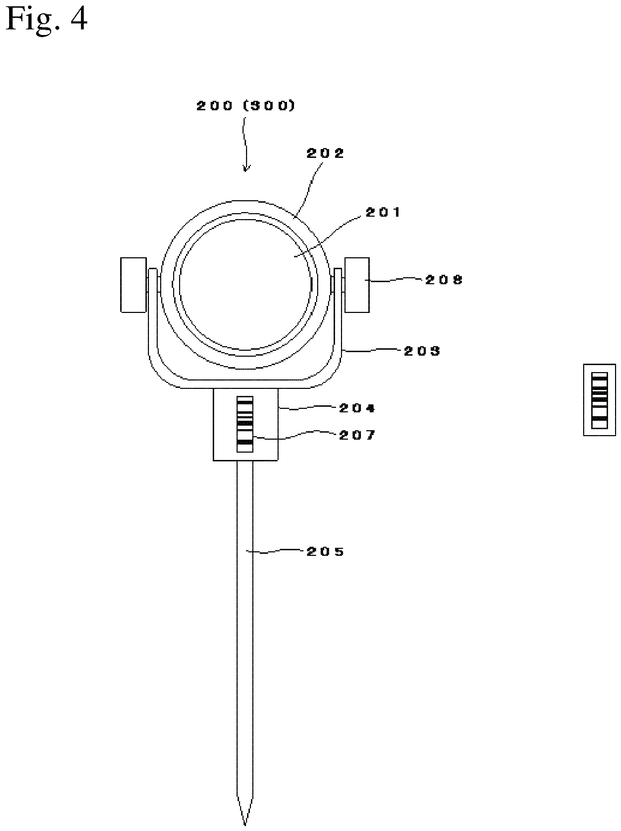

Hereinafter the reflection prims device is explained. Fig. 4 is a front view of the reflection prism device. Fig. 5A is a side view of a reflection prism device 200 for which the prism constant is 0 mm, and Fig. 5B is a side view of a reflection prism device 300 for which the prism constant is 30 mm. In these examples, even if prism constants differ, external appearances of reflection prism devices are similar seen from the front (although position relationships of parts in the depth direction are, in a strict sense different, because the differences are small, they are regarded as having the same external appearances here). Furthermore, since parts constructing the two reflection prism devices are the same, the same reference numerals are used for each device in the following explanation.

The reflection prism devices 200 and 300 include a reflection prism 201, a holder 202 holding the reflection prism 201, a U-shaped arm 203 supporting the holder 202, a base portion 204 supporting a lower part of the arm 203, and a support pillar 205 fixed at a lower part of the base portion 204.

The reflection prism 201 can be adjusted in elevation angle and depression angle with respect to the arm 203. The reflection prism 201 is fixed in elevation angle and depression angle with respect to the arm 203 by rotating a knob 208.

Difference between the reflection prism devices 200 and 300 is a position of the reflection prism 201 in an optical axis direction with respect to the holder 202. In the reflection prism device 200, because of the reason explained relating to Fig. 1A, the reflection prism 201 is at a position shifted in a forward direction (direction toward the laser positioning device) in an optical axis with respect to the holder 202, compared to the reflection prism 300.

In the reflection prism devices 200 and 300, a control point (a point being the basis for ranging) is set on an axis line of the support pillar 205. Since the top of the support pillar 205 is sharp, while in a condition in which the support pillar 205 is maintained vertical, the top is contacted to a measurement point which is set on the ground or a floor, so that the reflection prism devices 200 and 300 are set.

The reflection prism devices 200 and 300 are horizontally rotated around the support pillar 205 as an axis so that orientation in the horizontal direction is adjusted. An embodiment is also possible in which the base portion 204 is held in a horizontally rotatable condition on a supporting member such as a tripod, instead of on the support pillar 205.

In a front surface of the base portion 204, a barcode 207 indicating the prism constant is displayed. Instead of the barcode 207, a code display in letters, two-dimensional barcode (QR code), or other code display by other diagram information can be used. In addition, an embodiment is also possible in which the prism constant is directly displayed.

### Obtaining Prism Constant and Obtaining Orientation of Reflection Prism Device

The image analyzing portion 110 reads code information corresponding to the barcode 207 from an image of the barcode 207 imaged by the wide angle camera 105 and/or the telescopic camera 106. This code information is the identification information of the reflection prism device. Based on this code information, the prism constant obtaining portion 111 specifies a model number of the reflection prism device on which the barcode 207 is mounted, and the prism constant of the reflection prism device is obtained.

In this case, a date shown in Fig. 6 is stored in the data storing portion 118, and based on this data, the prism constant corresponding to the code which is read is obtained. The data of Fig. 6 is preliminarily obtained, and it is stored in the data storing portion 118 as known data.

For example, it is assumed that a code information read from an image is OΔ□◇OΔ (circle, triangle, square, rhomboid, circle, and triangle). In this case, from the data in Fig. 6, a model number of the reflection prism is specified, and the prism constant 30 mm is obtained.

A method is also possible in which relationships between an external appearance of a reflection prism device and a prism constant is studied beforehand, and the data is stored in the data storing portion 118. In this case, the image analyzing portion 110 identifies the reflection prism device by the external appearance image of the reflection prism device imaged by the wide angle camera 105 and/or the telescopic camera 106. An embodiment is also possible in which the reflection prism device is identified by combining code information and information of external appearance of the reflection prism device.

Furthermore, the image analyzing portion 110 determines orientation of the reflection prism device 200 (or 300) with respect to the laser positioning device 100 imaged by the wide angle camera 105 and/or the telescopic camera 106. Hereinafter, this process is explained.

A three-dimensional model of the reflection prism device used is stored in the data storing portion 118. Fig. 7 shows one example of this data. This three-dimensional model is a 3D data constructed by an outline showing the external appearance of the reflection prism device, for example, it can be obtained from a designing data (three-dimensional CAD data) of each of the reflection prism devices. The three-dimensional data of each reflection prism device is obtained by using stereophotography or laser scanning, and the three-dimensional model data can be obtained therefrom.

Hereinafter, a process is explained in which orientation of the reflection prism is determined based on an image in which the reflection prism device is photographed. Here, it is assumed that the reflection prism device is at a horizontal direction or a direction which can be regarded as horizontal direction seen from the laser positioning device 100.

First, based on a code read from a photographed image, a three-dimensional model of the reflection prism device, which is an object, is obtained with reference to data shown in Fig. 7.

After obtaining the three-dimensional model of the reflection prism device, a diagram seen from the front (0 degree direction), a diagram seen 5 degrees from right oblique, a diagram seen 10 degrees from right oblique, a diagram seen from 15 degrees right oblique, a diagram seen from 20 degrees right oblique, a diagram seen from 25 degrees right oblique, and a diagram seen from 30 degrees right oblique of the three-dimensional model are prepared. Similarly, a diagram seen from 5 degrees left oblique, a diagram seen from 10 degrees left oblique, a diagram seen from15 degrees left oblique, a diagram seen from 20 degrees left oblique, a diagram seen from 25 degrees left oblique, and a diagram seen from 30 degrees left oblique of the three-dimensional model are prepared.

That is, the images of the reflection prism device seen from mutually different viewpoints are prepared. Hereinafter, an image of the reflection prism device per each viewpoint is called a model image.

Then, the model images in which the three-dimensional model is seen from each of the directions (in this case, total 15 images) and the photographed image of the reflection prism photographed by the wide angle camera 105 and/or the telescopic camera 106, are compared. By this comparison, a model image which is nearest to the photographed image is searched. This searching is performed by a conventional image analyzing technique.

Then, the angle (angle viewing the three-dimensional model) in the searched model image is obtained. For example, in a case in which the searched model image is the model image seen from 10 degrees right oblique, it is indicated that the laser positioning device 100 is seen in a direction of approximately 10 degrees right oblique from the front direction of the reflection prism device. In this case, the reflection prism device does not face in front toward the laser positioning device 100, and instead, faces a direction rotated 10 degrees to the left.

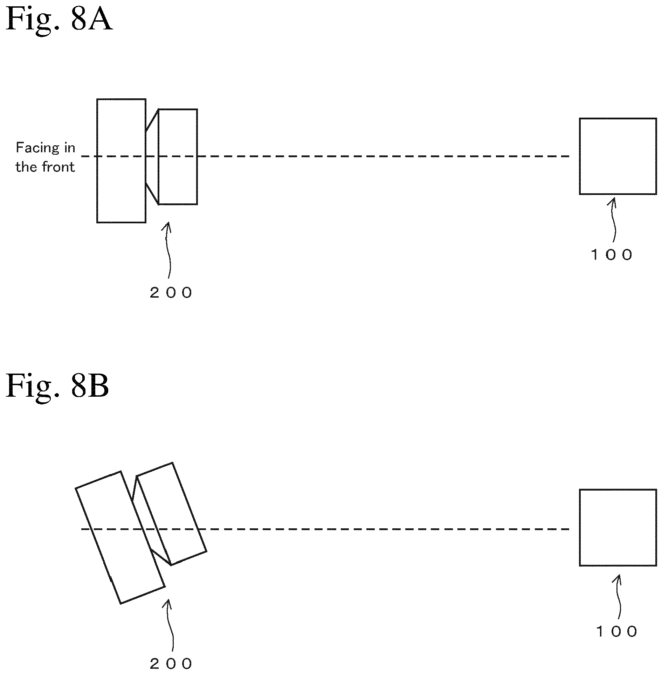

Figs. 8A and 8B are a plan view seen from vertically above. Fig. 8A shows a situation in which the reflection prism device 200 faces in the front toward the laser positioning device 100. Fig. 8B shows a situation in which the reflection prism device 200 faces a little to the left direction with respect to the laser positioning device 100.

By the above process, orientation of the reflection prism device with respect to the laser positioning device is determined. This process is performed in the image analyzing portion 110.

Here, the example in which angle is set per every 5 degrees is explained, a finer setting (for example, every 2 degrees or 3 degrees) is also possible. Furthermore, if reduction in accuracy is acceptable, a courser setting (for example, every 10 degrees) is also possible. In addition, an embodiment is also possible in which the three-dimensional model is seen from an upper oblique or a lower oblique so as to prepare model images.

### Example of Steps of Process

Hereinafter, one example of steps to perform positioning (ranging) of the reflection prism device 200 or 300 using the laser positioning device 100 is explained. A program executing the process explained as follows is stored in an appropriate storage medium, and is executed by a CPU of a computer stored in the laser positioning device 100.

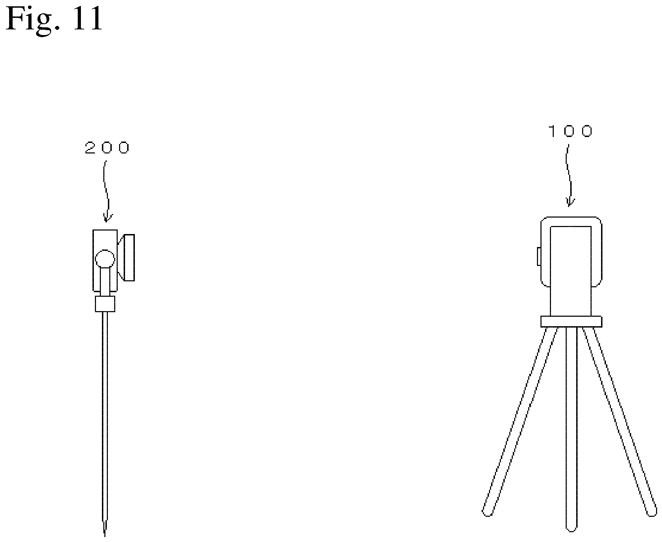

The following process is started under conditions in which the laser positioning device 100 is arranged and the operator arranges the reflection prism device 200 (or 300) at a predetermined position to perform positioning (see Fig. 11). It should be noted that before the process, the external orientation elements (position and orientation) of the laser positioning device 100 are already calculated and known.

First, the reflection prism device 200 is photographed by the wide angle camera 105 and/or the telescopic camera 106, and the image data obtained therein is obtained (step S101). This process is performed in the image data receiving portion 109. During the photographing, an attempt must be made to face the front of the reflection prism device 200 toward the laser positioning device 100, although approximate facing is sufficient and is allowable.

Next, a display of a code data (in this case, display of barcode 207) is detected from the photographed image of the reflection prism device 200 obtained in the step S101, and the code is read (step S102).

Next, the code which is read is applied to the data of Fig. 6, so as to obtain a model number of the objective reflection prism device 200 and to identify the reflection prism device 200 (step S103). The processes in the steps S102 and S103 are performed in the image analyzing portion 110.

Next, the code which is read in the step S102 is applied to the table data of Fig. 6, so as to obtain a prism constant of the objective reflection prism device 200 (step S104). This process is performed in the prism constant obtaining portion 111.

Next, the model number which is obtained in the step S103 is applied to the data of Fig. 7, so as to obtain a three-dimensional model of the corresponding reflection prism device (in this example, the reflection prism device 200 in Fig. 11) (step S105). Next, orientation of the reflection prism device 200 with respect to the laser positioning device 100 using the three-dimensional model obtained in the step S105 is specified (step S106). The processes of steps S105 and S106 are performed in the reflection prism device orientation obtaining portion 114.

Next, information of orientation of the reflection prism device 200 with respect to the laser positioning device 100 obtained in the step S106 is announced (step S107). In this process, the announced information of orientation of the reflection prism device 200 with respect to the laser positioning device 100 is transmitted to a communication terminal carried by the operator who arranges the reflection prism device 200 via a communicating device 119.

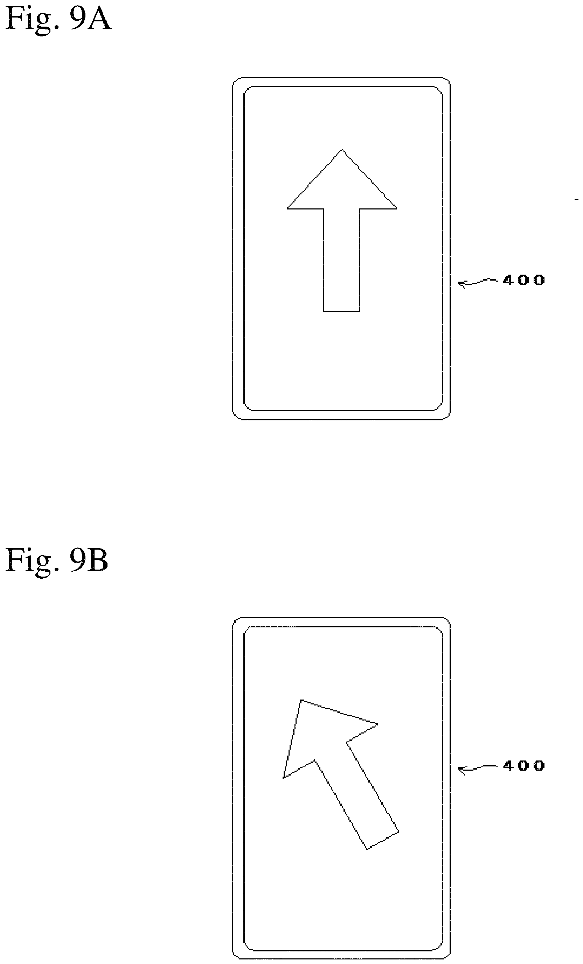

Figs. 9A and 9B show one example of the announced information displayed on a display of the communication terminal 400 carried by the operator who arranges the reflection prism device 200. As the communication terminal 400, a dedicated communication terminal, a smartphone, a tablet or the like can be used.

Fig. 9A shows a situation in which the display of the communication terminal 400 displays the above announced information indicating that the reflection prism device 200 faces in the front with respect to the laser positioning device 100 (facing front surface). Fig. 9B shows a situation in which the display of the communication terminal 400 displays the above announced information indicating that the reflection prism device 200 faces a little to the left with respect to the laser positioning device 100.

After the step S107, determination is performed whether or not the reflection prism device 200 faces in the front toward the laser positioning device 100 (step S108). This process is performed in the determining portion 116. If the reflection prism device 200 faces in the front toward the laser positioning device 100, then, it proceeds to step S109, and if it does not face in the front, executes the process of the step S106 and subsequent steps again.

The determination is performed by determining whether or not a facing angle is within a predetermined range such as within ±5 degrees. Of course, an embodiment is also possible in which determination is performed whether or not facing is complete.

For example, an operator who saw the display of Fig. 9B attempts rotating the reflection prism device 200 a little in a clockwise direction seen from above. Then, at a step in which the reflection prism device 200 faces in the front toward the laser positioning device 100 or at a step the reflection prism device can be regarded facing in the front, determination at the step S108 is "YES", and proceeds to the step S109.

In the step S109, ranging of the reflection prism device 200 using ranging light is performed (step S109). Next, using the prism constant obtained in the step S104, the ranged value obtained in the step S109 is corrected (step S110). This process is performed in the ranged data correcting portion 112.

Then, the ranged value corrected in the step S110 is fixed as the ranged value (step Sill). In this way, ranging of the reflection prism device 200 (measuring distance from the laser positioning device 100) in Fig. 11 is performed.

Furthermore, a position of the reflection prism device 200 in an absolute coordinate system is calculated based on the ranged value obtained, the external orientation elements (position and orientation) of the laser positioning device 100 and the direction of the reflection prism device 200 seen from the laser positioning device 100. That is, positioning of the reflection prism device 200 is performed.

### Advantages

The prism constant of the reflection prism device can be obtained automatically based on a photographed image, and the ranged value is corrected using this prism constant. Stress on the operator during this is low, and the operation regarding setting of the prism constant can be facilitated. In addition, determination of whether or not the reflection prism device faces in the front toward the laser positioning device is performed, and the information is announced to the operator handling the reflection prism device in real time. In this way, it becomes easier to face the reflection prism device in the front toward the laser positioning device, and high measurement accuracy can be obtained.

### Other Matters

Here, an example of the laser positioning device is explained as an example of the light wave positioning device; however, the present invention can be employed with another surveying device having function of laser ranging, such as a laser scanner. Furthermore, the present invention can also be employed with a positioning device using a light type other than laser.

It is possible that a part performing a process regarding automatic obtaining of the prism constant and/or a process regarding determination of orientation of the reflection prism device can be independent and can function as a data processing device. In this case, the part is constructed by one or more selected from a PC (personal computer), a microcomputer, and a dedicated hardware. For example, at least one of the image data receiving portion 109, the image analyzing portion 110, the prism constant obtaining portion 111, the ranged data correcting portion 112, the position calculating portion 113, the reflection prism device orientation obtaining portion 114, the announcing portion 115, the determining portion 116, and the data storing portion 118 in a PC, and the PC can be used as a data processing apparatus which performs at least a part of processing regarding automatic obtaining of the prism constant. Structure of Fig. 3 is understood as the laser positioning device 100 including the above data processing apparatus.

### Explanation of Reference Numerals

100: laser positioning device, 105: wide angle camera, 151: base portion, 152: tripod, 153: horizontal rotating portion, 154: vertical rotating portion, 155: objective lens, 200: reflection prism device, 201: reflection prism, 202: holder, 203: arm, 204: base portion, 205: support pillar, 207: barcode, 208: knob, 300: reflection prism device, and 400: communication terminal.

## Claims

1. A data processing apparatus comprising:
an image data obtaining portion obtaining image data which is obtained by photographing a reflection prism device,
a storing portion for storing a relationship of a prism constant of the reflection prism device and the image data, and
a prism constant obtaining portion obtaining the prism constant of the reflection prism device based on the relationship.

2. The data processing apparatus according to claim 1, wherein the relationship is a relationship of an external appearance of the reflection prism device and the prism constant.

3. The data processing apparatus according to claim 1 or 2, wherein the relationship is a relationship of a letter or code display displayed on the reflection prism device and the prism constant.

4. The data processing apparatus according to one of claims 1 to 3, wherein the apparatus further comprises:
a reflection prism device orientation obtaining portion obtaining orientation of the reflection prism device based on the image data, and
an announcing portion announcing information of the orientation of the reflection prism device.

5. The data processing apparatus according to claim 4,
wherein the image data is output from a camera of a light wave positioning device, and
wherein the orientation of the reflection prism device is an orientation with respect to the light wave positioning device.

6. The data processing apparatus according to claim 5, wherein information of orientation of the reflection prism device with respect to the light wave positioning device is transmitted to an external terminal wirelessly.

7. The data processing apparatus according to claim 5 or 6,
wherein a three-dimensional model of the reflection prism device is stored in the storing portion, and
wherein orientation of the reflection prism device with respect to the light wave positioning device is obtained based on an image of a case in which the three-dimensional model is seen from a changed viewpoint.

8. The data processing apparatus according to one of claims 5 to 7,
wherein the apparatus further comprises a determining portion determining whether or not the reflection prism device faces to the front with respect to the light wave positioning device based on orientation of the reflection prism device with respect to the light wave positioning device, and
wherein ranging of the reflection prism device is performed by the light wave positioning device in a case in which it is determined that the devices face to the front.

9. A data processing method in a light wave positioning device having a camera, comprising steps of:
obtaining image data which is obtained by photographing a reflection prism device by the camera,
obtaining a prism constant of the reflection prism device based on the image data of the reflection prism device,
obtaining an orientation of the reflection prism device with respect to the light wave positioning device based on the image data of the reflection prism device,
transmitting information of the orientation of the reflection prism device with respect to the light wave positioning device to a terminal, and
displaying information of the orientation of the reflection prism device with respect to the light wave positioning device on a displaying device of the terminal.

10. A data processing method comprising steps of:
obtaining image data which is obtained by photographing a reflection prism device, and
obtaining a prism constant of the reflection prism device based on relationship of prism constant of the reflection prism device and the image data.

11. A data processing program which is read by a computer processor so as to execute, and the program executes the computer processor functioning as the following portions, comprising:
an image data obtaining portion obtaining an image data which is obtained by photographing a reflection prism device,
a storing portion storing a relationship of a prism constant of the reflection prism device and the image data, and
a prism constant obtaining portion obtaining the prism constant of the reflection prism device based on the relationship.
